# EUROPEAN PATENT APPLICATION

(11) **EP 4 664 603 A1**
(43) Date of publication of application: **17.12.2025**
(21) Application number: 24181701.4
(22) Date of filing: 12.06.2024
(51) Int. Cl.: H01M 10/613, H01M 10/625, H01M 10/647, H01M 10/6555, H01M 10/6556, H01M 50/209, H01M 50/289

(54) **A BATTERY CELL STACK ASSEMBLY, A BATTERY PACK , A BATTERY MODULE, A VEHICLE, AND A METHOD**

(71) Applicant: VOLVO TRUCK CORPORATION, 405 08 Göteborg (SE)
(72) Inventor: Jonsson, Kasper, 417 57 Göteborg (SE); Irannezhad, Mike, 413 30 Göteborg (SE); Rout, Dhirendra, 422 54 Göteborg (SE)
(74) Representative: Kransell & Wennborg KB

(57) **Abstract**

A battery cell stack assembly (1) for a battery module or a battery pack, the battery cell stack assembly having a longitudinal extension along a longitudinal direction, a width extension along a width direction (W) and a height extension along a height direction (H), the battery cell stack assembly comprising:
- a plurality of prismatic battery cells (2), stacked next to each other in at least three longitudinally extending and parallel battery cell rows (R1, R2, R3),
- a bottom support plate (3), wherein the at least three battery cell rows (R1, R2, R3) are supported on a support surface of the bottom support plate which faces upwardly in the height direction (H),
- a first cooling plate (4), provided in a first longitudinally extending space (S1) in-between two adjacent battery cell rows (R1, R2) of the at least three battery cell rows (R1, R2, R3), and extending in the longitudinal direction and the height direction (H) such that it forms an intermediate wall between the two adjacent battery cell rows (R1, R2),
- a first alignment element (32), provided in the first longitudinally extending space (S1) and below the first cooling plate, as seen in the height direction (H), wherein the first alignment element has an extension in the longitudinal direction corresponding to at least a portion of an extension of the first longitudinally extending space (S1) and is configured to align the two adjacent battery cell rows (R1, R2) with respect to the longitudinal direction (L), and
- wherein a maximum width (W1) of the first cooling plate in the width direction (W) is larger than a maximum width (W2) of the first alignment element in the width direction (W).

## Description

### TECHNICAL FIELD

The disclosure relates generally to energy storage systems. In particular aspects, the disclosure relates to a battery cell stack assembly, a battery pack, a battery module, a vehicle, and a method for assembling a battery cell stack assembly. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electrically powered vehicle may comprise an energy storage system for storing electrical energy. The energy storage system is typically in the form of one or more battery packs or modules comprising a plurality of electrochemical cells. The electrochemical cells may be lithium-ion cells or any other type of cell for storing electrical energy.

The energy storage system may comprise a plurality of battery cells which are stacked one after the other in at least one row. There is a strive to develop improved technology relating to energy storage systems, such as technology which improves the packaging of the battery cells in battery packs and/or modules, and/or which facilitates manufacturing of the battery packs and/or modules.

### SUMMARY

According to a first aspect of the disclosure, there is provided a battery cell stack assembly for a battery module or a battery pack. The battery cell stack assembly has a longitudinal extension along a longitudinal direction, a width extension along a width direction and a height extension along a height direction. The battery cell stack assembly comprises:
- a plurality of prismatic battery cells, stacked next to each other in at least three longitudinally extending and parallel battery cell rows,
- a bottom support plate, wherein the at least three battery cell rows are supported on a support surface of the bottom support plate which faces upwardly in the height direction,
- a first cooling plate, provided in a first longitudinally extending space in-between two adjacent battery cell rows of the at least three battery cell rows, and extending in the longitudinal direction and the height direction such that it forms an intermediate wall between the two adjacent battery cell rows,
- a first alignment element, provided in the first longitudinally extending space and below the first cooling plate, as seen in the height direction, wherein the first alignment element has an extension in the longitudinal direction corresponding to at least a portion of an extension of the first longitudinally extending space and is configured to align the two adjacent battery cell rows with respect to the longitudinal direction, and
- wherein a maximum width of the first cooling plate in the width direction is larger than a maximum width of the first alignment element in the width direction.

The first aspect of the disclosure may seek to improve packaging of the battery cells in the battery cell stack assembly, and/or to facilitate manufacturing of the battery cell stack assembly. A technical benefit may include that the at least three battery cell rows are better aligned with respect to the longitudinal direction, while also ensuring that cooling of the battery cells is not compromised. This is since the first cooling plate is made thicker than the first alignment element, while the first alignment element may act as a stopper for the battery cells. Thereby, the first alignment element may ensure that the battery cells are within a certain tolerance range such that busbars, auxiliary electronic equipment, etc. can be easily connected to the battery cells during manufacturing. This may also result in a more robust and reliable configuration, e.g. mitigating the risk of unintentional detachment of the busbars, auxiliary electronic equipment, etc.

Optionally in some examples, including in at least one preferred example, the width of the first cooling plate in the width direction is larger than the width of the first alignment element in the width direction at any location along at least the portion of the extension of the first longitudinally extending space. A technical benefit may include a more reliable alignment of the battery cell rows, and/or a more reliable and predictive cooling of the battery cells.

Optionally in some examples, including in at least one preferred example, the first cooling plate, as seen in a sectional plane which is perpendicular to the longitudinal direction, has an extension in the height direction which corresponds to at least 70 % of an extension in the height direction of the first longitudinally extending space. A technical benefit may include a more reliable cooling of the battery cells, i.e. such that a large portion of side surfaces of the battery cells are in contact with the first cooling plate.

Optionally in some examples, including in at least one preferred example, the first alignment element is attached to the bottom support plate or is integrally formed with the bottom support plate. A technical benefit may include that a more reliable alignment of the battery cells on the bottom support plate is achieved.

Optionally in some examples, including in at least one preferred example, the first alignment element comprises a first upper support surface facing upwardly in the height direction, wherein the battery cell stack assembly is configured such that the first cooling plate is supported on the first upper support surface. A technical benefit may include improved support for the first cooling plate, e.g., such that the first cooling plate is positioned correctly with respect to the battery cells.

Optionally in some examples, including in at least one preferred example, the first alignment element comprises at least one first side surface, preferably two first side surfaces, facing towards a respective battery cell row of the two adjacent battery cell rows in the width direction, wherein the first side surface facing towards the respective battery cell row is a planar surface with an extension in the longitudinal direction and the height direction. A technical benefit may include that a more reliable and predictive alignment of the battery cells is enabled.

Optionally in some examples, including in at least one preferred example, the battery cell stack assembly further comprises:
- a second cooling plate, provided in a second longitudinally extending space in-between two other adjacent battery cell rows of the at least three battery cell rows, and extending in the longitudinal direction and the height direction such that it forms an intermediate wall between the two other adjacent battery cell rows, and wherein one battery cell row of the two other adjacent battery cell rows is a battery cell row of the two adjacent battery cell rows. A technical benefit may include improved cooling of the two other battery cell rows.

Optionally in some examples, including in at least one preferred example, the battery cell stack assembly further comprises:
- a second alignment element, provided in the second longitudinally extending space and below the second cooling plate, as seen in the height direction, wherein the second alignment element has an extension in the longitudinal direction corresponding to at least a portion of an extension of the second longitudinally extending space and is configured to align the two other adjacent battery cell rows with respect to the longitudinal direction, and
- wherein a maximum width of the second cooling plate in the width direction is larger than a maximum width of the second alignment element in the width direction. A technical benefit may include that the at least three battery cell rows are better aligned with respect to the longitudinal direction, while also ensuring that cooling of the battery cells in each row is not compromised. Similar to the above, this is since the second cooling plate is made thicker than the second alignment element, while the second alignment element may act as a stopper for the battery cells. Thereby, the second alignment element may further ensure that the battery cells are within a certain tolerance range such that busbars, auxiliary electronic equipment, etc. can be easily connected to the battery cells during manufacturing. This may also result in a more robust and reliable configuration.

Optionally in some examples, including in at least one preferred example, the width of the second cooling plate in the width direction is larger than the width of the second alignment element in the width direction at any location along at least the portion of the extension of the second longitudinally extending space. A technical benefit may include a more reliable alignment of the battery cell rows, and/or a more reliable and predictive cooling of the battery cells.

Optionally in some examples, including in at least one preferred example, the second alignment element is attached to the bottom support plate or is integrally formed with the bottom support plate. A technical benefit may include that a more reliable alignment of the battery cells on the bottom support plate is achieved.

Optionally in some examples, including in at least one preferred example, the second alignment element comprises a second upper support surface facing upwardly in the height direction, wherein the battery cell stack assembly is configured such that the second cooling plate is supported on the second upper support surface. A technical benefit may include improved support for the second cooling plate, e.g., such that the second cooling plate is positioned correctly with respect to the battery cells.

Optionally in some examples, including in at least one preferred example, the second alignment element comprises at least one second side surface, preferably two second side surfaces, facing towards a respective battery cell row of the two other adjacent battery cell rows in the width direction, wherein the second side surface facing towards the respective battery cell row is a planar surface with an extension in the longitudinal direction and the height direction. A technical benefit may include that a more reliable and predictive alignment of the battery cells is enabled.

Optionally in some examples, including in at least one preferred example, the second cooling plate, as seen in a sectional plane which is perpendicular to the longitudinal direction, has an extension in the height direction which corresponds to at least 70 % of an extension in the height direction of the second longitudinally extending space. A technical benefit may include a more reliable cooling of the battery cells, i.e. such that a large portion of side surfaces of the battery cells are in contact with the second cooling plate.

Optionally in some examples, including in at least one preferred example, the second cooling plate is integrally formed with the bottom support plate or attached to the bottom support plate. Accordingly, in some examples, the second cooling plate may form a structural part of the bottom support plate. Hence, the second cooling plate may in these examples also act as an alignment element.

Optionally in some examples, including in at least one preferred example, any one of, preferably each one of, the cooling plates as disclosed herein comprises at least one respective cooling circuit for coolant.

Optionally in some examples, including in at least one preferred example, the bottom support plate comprises a cooling circuit for coolant. A technical benefit may include improved cooling of the battery cells, i.e. such that cooling is also performed from below with respect to the battery cells.

Optionally in some examples, including in at least one preferred example, each one of the plurality of prismatic battery cells comprises at least one electric terminal, such as two electric terminals, on its top surface facing upwardly in the height direction. A technical benefit may include that the electrical terminals are aligned along the longitudinal direction such that busbars are more easily and reliably connectable to the electric terminals.

According to a second aspect of the disclosure, a battery pack comprising a battery cell stack assembly according to any one of the examples of the first aspect of the disclosure is provided. Advantages and technical benefits of the second aspect of the disclosure are analogous to the advantages and technical benefits of the first aspect of the disclosure.

According to a third aspect of the disclosure, a battery module for a battery pack comprising a battery cell stack assembly according to any one of the examples of the first aspect of the disclosure is provided. Advantages and technical benefits of the third aspect of the disclosure are analogous to the advantages and technical benefits of the first aspect of the disclosure.

According to a fourth aspect of the disclosure, a vehicle comprising a battery pack according to the second aspect of the disclosure or a battery module according to the third aspect of the disclosure is provided. Advantages and technical benefits of the fourth aspect of the disclosure are analogous to the advantages and technical benefits of the first, second and third aspects of the disclosure.

According to a fifth aspect of the disclosure, a method for assembling a battery cell stack assembly according to any one of the examples disclosed herein is provided. The method comprises:
- providing a first battery cell row of the two adjacent battery cell rows on a first side of the first alignment element and providing a second battery cell row of the two adjacent battery cell rows on a second side of the first alignment element. The fifth aspect of the disclosure may seek to improve packaging of the battery cells in the battery cell stack assembly, and to facilitate manufacturing of the battery cell stack assembly. A technical benefit may include that the at least three battery cell rows are better aligned with respect to the longitudinal direction, while also ensuring that cooling of the battery cells is not compromised. Advantages and technical benefits of the fifth aspect of the disclosure are analogous to advantages and technical benefits of the first aspect of the disclosure.

Optionally in some examples, including in at least one preferred example, the method comprises providing a third battery cell row of the at least three battery cell rows next to the two adjacent battery cell rows.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary battery cell stack assembly in a side view according to an example.
**FIG. 2b** is an exemplary battery cell stack assembly in a more detailed view according to an example.
**FIG. 2c** is an exemplary battery cell stack assembly in a more detailed view according to an example.
**FIG. 2d** is an exemplary battery cell stack assembly in a top view according to an example.
**FIG. 3** is an exemplary battery cell stack assembly in a side view according to an example.
**FIG. 4a** is an exemplary battery cell stack assembly in a side view according to an example.
**FIG. 4b** is an exemplary battery cell stack assembly in a top view according to an example.
**FIG. 5** is an example flowchart of a method according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to improve packaging of battery cells in a battery cell stack assembly, and/or to facilitate manufacturing of the battery cell stack assembly. Additionally, or alternatively, an aim of the present disclosure is to provide a battery cell stack assembly, a battery pack, a battery module, a vehicle, and/or a method for assembling a battery cell stack assembly, which at least partly alleviate one or more drawbacks of the prior art, or which at least provide suitable alternatives. For example, by the present disclosure, at least three battery cell rows of a battery cell stack assembly may be better aligned with respect to the longitudinal direction, while also ensuring that cooling of the battery cells is not compromised. The present disclosure may additionally or alternatively result in a more reliable, robust and cost-effective battery cell stack assembly for a battery pack or battery module.

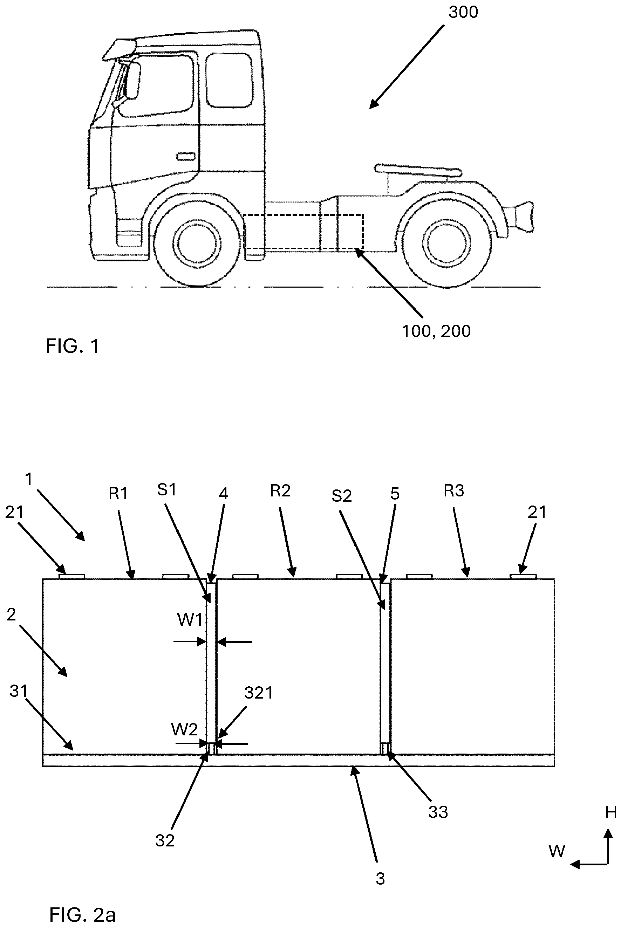

**FIG. 1** is an exemplary vehicle 300 in a side view according to an example. The vehicle 300 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 300 may be driven by a user (not shown) and/or be at least partly automatically driven, i.e., it may be a vehicle comprising autonomous driving capabilities. The vehicle 300 may be a fully electric vehicle or a hybrid vehicle. As such, the vehicle 300 may comprise one or more electric motors/generators and/or an internal combustion engine (not shown) for driving the vehicle 300. The vehicle 300 comprises a battery pack 100 and/or a battery module 200 according to examples disclosed herein. The battery pack 100 and/or the battery module 200 are/is preferably adapted to power the one or more electric motors/generators. Even though a vehicle is shown, it shall be noted that the battery cell stack assembly 1, the battery pack 100, and/or the battery module 200 as disclosed herein may also be used for stationary machinery, such as in a building.

**FIG. 2a** depicts an example of a battery cell stack assembly 1 in a schematic side view according to an example. The battery cell stack assembly 1 may for example be part of the battery pack 100 or the battery module 200 as shown in FIG. 1.

The battery cell stack assembly 1 has a longitudinal extension along a longitudinal direction L, a width extension along a width direction W and a height extension along a height direction H. The longitudinal direction L is not shown in this example, but is perpendicular to the width direction W and the height direction H. More specifically, the directions L, H and W are perpendicular to each other, and preferably correspond to a Cartesian coordinate system. The schematic side view in FIG. 2a corresponds to a sectional view which is perpendicular to the longitudinal direction L.

The battery cell stack assembly 1 comprises a plurality of prismatic battery cells 2, stacked next to each other in at least three longitudinally extending and parallel battery cell rows R1, R2, R3. Each prismatic battery cell 2 has a box-shaped form.

The battery cell stack assembly 1 further comprises a bottom support plate 3, wherein the at least three battery cell rows R1, R2, R3 are supported on a support surface 31 of the bottom support plate 3 which faces upwardly in the height direction H. The bottom support plate 3 is preferably made of a structurally rigid material, such as aluminum. The at least three battery cell rows R1, R2, R3 may be directly supported on the support surface 31, or an intermediate element or material, such as glue and/or TIM (thermal insulation material), may be provided in-between the support surface 31 and the at least three battery cell rows R1, R2, R3.

The battery cell stack assembly 1 further comprises a first cooling plate 4, provided in a first longitudinally extending space S 1 in-between two adjacent battery cell rows R1, R2 of the at least three battery cell rows R1, R2, R3, and extending in the longitudinal direction L and the height direction H such that it forms an intermediate wall between the two adjacent battery cell rows R1, R2. The first cooling plate 4 preferably comprises a cooling circuit for coolant. The cooling plates as disclosed herein may be used to cool and/or heat the battery cells 2. The height direction H may correspond to a vertical direction. Hence, the first cooling plate 4 may be a vertical wall element in the first longitudinally extending space S1.

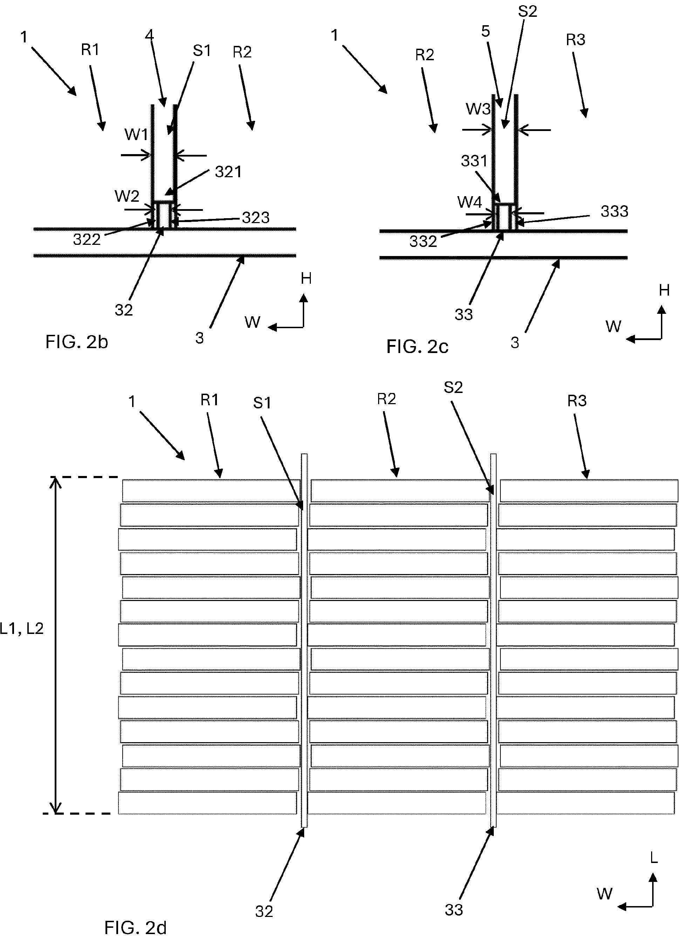

The battery cell stack assembly 1 further comprises a first alignment element 32, provided in the first longitudinally extending space S1 and below the first cooling plate 4, as seen in the height direction H. The first alignment element 32 has an extension in the longitudinal direction L corresponding to at least a portion of an extension L1 of the first longitudinally extending space S1 and is configured to align the two adjacent battery cell rows R1, R2 with respect to the longitudinal direction L. The longitudinal extension of the first alignment element 32 is better illustrated in e.g. **FIG. 2d** which will be further described in the below.

As may be gleaned in e.g. FIG. 2a, a maximum width W1 of the first cooling plate 4 in the width direction W is larger than a maximum width W2 of the first alignment element 32 in the width direction W.

**FIG. 2b** and **FIG. 2c** are examples of a battery cell stack assembly 1 as e.g. shown in FIG. 2a, but in a more detailed view.

With reference to FIG. 2a and FIG. 2c, it is shown that the battery cell stack assembly 1 may further comprise a second cooling plate 5, provided in a second longitudinally extending space S2 in-between two other adjacent battery cell rows R2, R3 of the at least three battery cell rows R1, R2, R3, and extending in the longitudinal direction L and the height direction H such that it forms an intermediate wall between the two other adjacent battery cell rows R2, R3, and wherein one battery cell row R2 of the two other adjacent battery cell rows R2, R3 is a battery cell row of the two adjacent battery cell rows R1, R2.

As further shown, the battery cell stack assembly 1 may further comprise a second alignment element 33, provided in the second longitudinally extending space S2 and below the second cooling plate 5, as seen in the height direction H, wherein the second alignment element 33 has an extension in the longitudinal direction L corresponding to at least a portion of an extension L2 (see FIG. 2d) of the second longitudinally extending space S2 and is configured to align the two other adjacent battery cell rows R2, R3 with respect to the longitudinal direction L. As depicted, a maximum width W3 of the second cooling plate 5 in the width direction W is preferably larger than a maximum width W4 of the second alignment element 33 in the width direction W. The first and/or second cooling plates 4, 5 preferably have a uniform width along the height direction H.

With reference to e.g. FIG. 2b and 2d, which depicts the battery cell stack assembly 1 from above, the width of the first cooling plate 4 in the width direction W is preferably larger than the width of the first alignment element 32 in the width direction W at any location along at least the portion of the extension L1 of the first longitudinally extending space S1. For example, the width of the first cooling plate 4 in the width direction W may be at least 5 % or at least 10 %, such as 5-100 %, 5-80 %, 5-70 % or 5-60 %, larger than the width of the first alignment element 32 in the width direction W at any location along at least the portion of the extension L 1 of the first longitudinally extending space S1.

With reference to e.g. FIG. 2c and 2d, the width of the second cooling plate 5 in the width direction W is preferably larger than the width of the second alignment element 33 in the width direction W at any location along at least the portion of the extension L2 of the second longitudinally extending space S2. For example, the width of the second cooling plate 5 in the width direction W may be at least 5 % or at least 10 %, such as 5-100 %, 5-80 %, 5-70 % or 5-60 %, larger than the width of the second alignment element 33 in the width direction W at any location along at least the portion of the extension L2 of the second longitudinally extending space S2.

The first and/or second alignment elements 32, 33 preferably have a uniform width along the longitudinal direction L. The first and/or second alignment elements 32, 33 may additionally or alternatively have a uniform width along the height direction H.

The first and/or second cooling plates 4, 5 preferably have a uniform width along the longitudinal direction L.

As shown in FIG. 2d, the first and/or second alignment elements 32, 33 may extend along the complete extension L1, L2 of the first/second longitudinally extending spaces S1, S2.

With reference to e.g. FIG. 2a, the first cooling plate 4, as seen in a sectional plane which is perpendicular to the longitudinal direction L, may have an extension in the height direction H which corresponds to at least 70 %, such as at least 80 % or 90 %, of an extension in the height direction H of the first longitudinally extending space S 1. Additionally, or alternatively, the second cooling plate 5, as seen in a sectional plane which is perpendicular to the longitudinal direction L, may have an extension in the height direction H which corresponds to at least 70 %, such as at least 80 % or 90 %, of an extension in the height direction H of the second longitudinally extending space S2.

The first alignment element 32 may as shown in e.g. FIG. 2a be attached to the bottom support plate 3 or be integrally formed with the bottom support plate 3. Additionally, or alternatively, the second alignment element 33 may be attached to the bottom support plate 3 or be integrally formed with the bottom support plate 3. The first and/or second alignment element 32, 33 as disclosed herein are/is preferably made of a structurally rigid material, such as fiber reinforced plastics, metal, e.g. aluminum, or any other structurally rigid material.

As illustrated in e.g. FIG. 2b, the first alignment element 32 may comprise a first upper support surface 321 facing upwardly in the height direction H, wherein the battery cell stack assembly 1 is configured such that the first cooling plate 4 is supported on the first upper support surface 321. The first cooling plate 4 may be directly supported on the first upper support surface 321 or an intermediate element or material may be provided therebetween, such as glue for attaching the first cooling plate 4 to the first alignment element 32. Additionally, or alternatively, as illustrated in e.g. FIG. 2c, the second alignment element 33 may comprise a second upper support surface 331 facing upwardly in the height direction H, wherein the battery cell stack assembly 1 is configured such that the second cooling plate 33 is supported on the second upper support surface 331. The second cooling plate 5 may be directly supported on the second upper support surface 331 or an intermediate element or material may be provided therebetween, such as glue for attaching the second cooling plate 5 to the second alignment element 33.

As illustrated in e.g. FIG. 2b, the first alignment element 32 may comprise at least one first side surface 322, preferably two first side surfaces 322, 323, facing towards a respective battery cell row R1, R2 of the two adjacent battery cell rows R1, R2 in the width direction W, wherein the first side surface 322, 323 facing towards the respective battery cell row R1, R2 is a planar surface with an extension in the longitudinal direction L and the height direction W. The battery cells 2 may as shown comprise matching planar surfaces. Additionally, or alternatively, as illustrated in e.g. FIG. 2c, the second alignment element 33 may comprise at least one second side surface 332, 333, preferably two second side surfaces 332, 333, facing towards a respective battery cell row R2, R3 of the two other adjacent battery cell rows R2, R3 in the width direction W, wherein the second side surface 332, 333 facing towards the respective battery cell row R2, R3 is a planar surface with an extension in the longitudinal direction L and the height direction W. The battery cells 2 may as shown comprise matching planar surfaces.

With reference to e.g. FIG. 2d, it is shown that the first and second alignment elements 32, 33 align the at least three adjacent battery cell rows R1, R2, R3 with respect to the longitudinal direction L. In fact, the first alignment element 32 is configured to act as a stopper for the battery cells 2 in the width direction W, and/or the second alignment element 33 is configured to act as a stopper for the battery cells 2 in the width direction W.

The first and/or second alignment element 32, 33 typically have a respective extension from the bottom support plate 3 in the height direction H which is less than 30 %, such as less than 20 % or 10 %, of an extension in the height direction H of the first longitudinally extending space S1.

As depicted in FIG. 2a, each one of the plurality of prismatic battery cells 2 preferably comprises at least one electric terminal 21, such as two electric terminals 21, on its top surface facing upwardly in the height direction H. The electrical terminals 21 will by the first and/or second alignment elements 32, 33 be better aligned along the longitudinal direction L. Thereby, attachment of busbars, auxiliary electronic equipment, such as sensors, FPC (flexible printed circuit), etc. (not shown), to the electric terminals and to the battery cells 2 may be facilitated. This may also result in a more reliable and robust configuration.

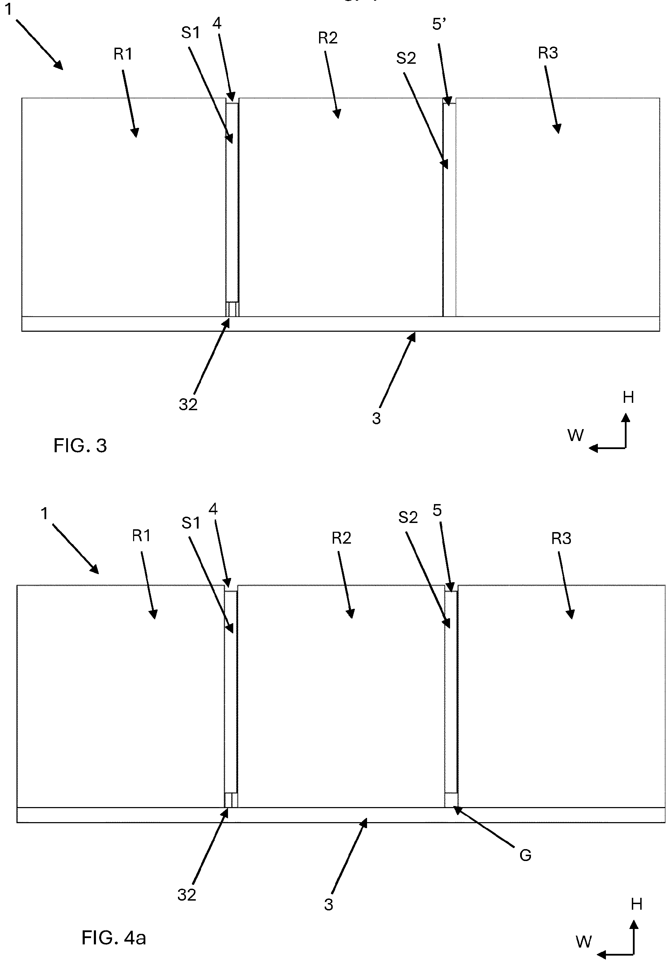

FIG. 3 depicts another example in a side view of a battery cell stack assembly 1 according to an example. The side view corresponds to a sectional view which is perpendicular to the longitudinal direction L. In this example, a second cooling plate 5' is depicted. As shown, the second cooling plate 5' may be integrally formed with the bottom support plate 3 or attached to the bottom support plate 3. As shown in this example, the second cooling plate 5' may have an extension in the height direction H which substantially corresponds to the height extension of the second longitudinally extending space S2 in the height direction H.

In some examples, the bottom support plate 3 may comprise a cooling circuit for coolant.

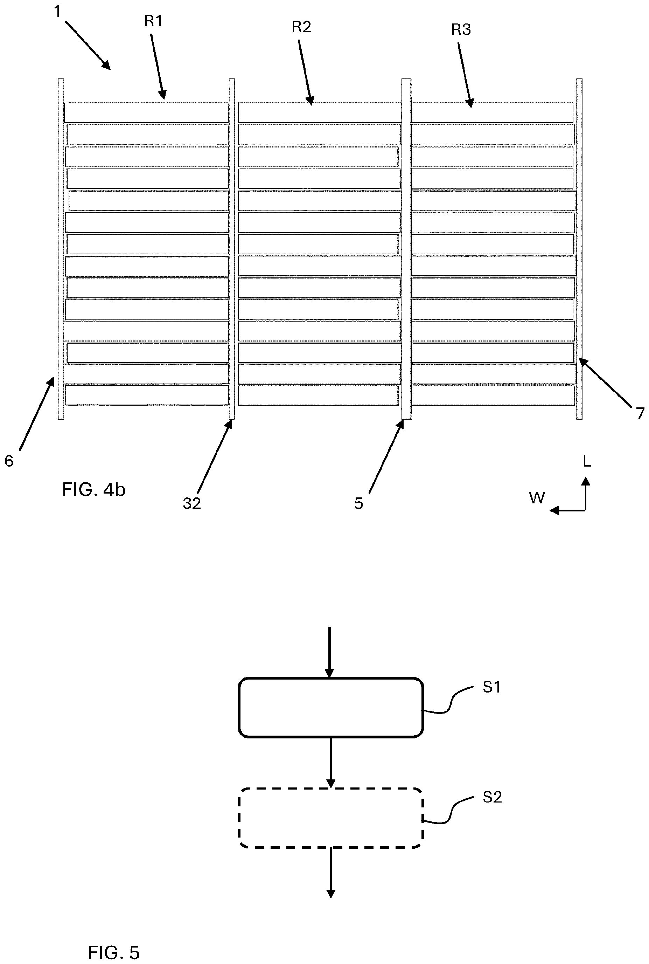

FIGS. 4a and 4b show other examples of a battery cell stack assembly 1 according to examples. In these examples, there is no second alignment element between the battery cell rows R2, R3. Hence, only the first alignment element 32 is used for aligning the at least three battery cell rows R1, R2, R3. It has been realized that in some examples it may suffice to have one alignment element for the at least three rows R1, R2, R3. As shown, in some examples, there may be a gap G between the second cooling plate 5 and the bottom support plate 3, which gap may correspond to a height of the first alignment element 32. In other examples, the second cooling plate is supported by the bottom support plate 3.

As illustrated in FIG. 4b, the battery cell stack assembly 1 may further comprise a third and/or a fourth cooling plate 6, 7. The third and/or fourth cooling plate 6, 7 are/is provided on a lateral outer side surface of the at least three battery cell rows R1, R2, R3. Thereby, improved cooling of the prismatic battery cells 2 may be achieved.

The battery cell stack assembly 1 may be part of a battery pack 100 or a battery module 200. The battery pack 100 and/or the battery module 200 may comprise at least three rows of battery cells 2, and at least one alignment element as disclosed herein, such as one, two, three or more alignment elements. The battery pack 100 may comprise several layers of battery cells provided on top of each other, or alternatively the battery pack 100 may comprise only one layer of battery cells.

The present disclosure also relates to a method for assembling a battery cell stack assembly 1 as disclosed herein. FIG. 5 depicts a flowchart of an example of the method. The method comprises at least one of the following actions, and the actions may be performed in any suitable order than described below:
S1: providing a first battery cell row R1 of the two adjacent battery cell rows R2, R2 on a first side of the first alignment element 32 and providing a second battery cell row R2 of the two adjacent battery cell rows R1, R2 on a second side of the first alignment element 32.

The method may further comprise (indicated by a dashed box):
S2: providing a third battery cell row R3 of the at least three battery cell rows R1, R2, R3 next to the two adjacent battery cell rows R1, R2. As shown in e.g. FIG. 2a, the third battery cell row R3 may be provided on a second side next to the second alignment element 33.

The method may comprise further actions, such as actions for providing the first/second cooling plate(s) 4, 5 in the respective longitudinally extending space S1, S2, and/or actions relating to pushing the battery cells 2 in a direction along the width direction W towards the respective alignment element 32, 33.

In the following, possible features and feature combinations of the present disclosure are presented as a list of Examples.

Example 1: A battery cell stack assembly (1) for a battery module (100) or a battery pack (200), the battery cell stack assembly (1) having a longitudinal extension along a longitudinal direction (L), a width extension along a width direction (W) and a height extension along a height direction (H), the battery cell stack assembly (1) comprising:
- a plurality of prismatic battery cells (2), stacked next to each other in at least three longitudinally extending and parallel battery cell rows (R1, R2, R3),
- a bottom support plate (3), wherein the at least three battery cell rows (R1, R2, R3) are supported on a support surface (31) of the bottom support plate (3) which faces upwardly in the height direction (H),
- a first cooling plate (4), provided in a first longitudinally extending space (S 1) in-between two adjacent battery cell rows (R1, R2) of the at least three battery cell rows (R1, R2, R3), and extending in the longitudinal direction (L) and the height direction (H) such that it forms an intermediate wall between the two adjacent battery cell rows (R1, R2),
- a first alignment element (32), provided in the first longitudinally extending space (S1) and below the first cooling plate (4), as seen in the height direction (H), wherein the first alignment element (32) has an extension in the longitudinal direction (L) corresponding to at least a portion of an extension (L 1) of the first longitudinally extending space (S 1) and is configured to align the two adjacent battery cell rows (R1, R2) with respect to the longitudinal direction (L), and
- wherein a maximum width (W1) of the first cooling plate (4) in the width direction (W) is larger than a maximum width (W2) of the first alignment element (32) in the width direction (W).

Example 2: The battery cell stack assembly (1) according to Example 1, wherein the width of the first cooling plate (4) in the width direction (W) is larger than the width of the first alignment element (32) in the width direction (W) at any location along at least the portion of the extension (L 1) of the first longitudinally extending space (S 1).

Example 3: The battery cell stack assembly (1) according to any one of the preceding Examples, wherein the first cooling plate (4), as seen in a sectional plane which is perpendicular to the longitudinal direction (L), has an extension in the height direction (H) which corresponds to at least 70 % of an extension in the height direction (H) of the first longitudinally extending space (S1).

Example 4: The battery cell stack assembly (1) according to any one of the preceding Examples, wherein the first alignment element (32) is attached to the bottom support plate (3) or is integrally formed with the bottom support plate (3).

Example 5: The battery cell stack assembly (1) according to any one of the preceding Examples, wherein the first alignment element (32) comprises a first upper support surface (321) facing upwardly in the height direction (H), wherein the battery cell stack assembly (1) is configured such that the first cooling plate (4) is supported on the first upper support surface (321).

Example 6: The battery cell stack assembly (1) according to any one of the preceding Examples, wherein the first alignment element (32) comprises at least one first side surface (322), preferably two first side surfaces (322, 323), facing towards a respective battery cell row (R1, R2) of the two adjacent battery cell rows (R1, R2) in the width direction (W), wherein the first side surface (322, 323) facing towards the respective battery cell row (R1, R2) is a planar surface with an extension in the longitudinal direction (L) and the height direction (W).

Example 7: The battery cell stack assembly (1) according to any one of the preceding Examples, further comprising:
- a second cooling plate (5), provided in a second longitudinally extending space (S2) in-between two other adjacent battery cell rows (R2, R3) of the at least three battery cell rows (R1, R2, R3), and extending in the longitudinal direction (L) and the height direction (H) such that it forms an intermediate wall between the two other adjacent battery cell rows (R2, R3), and wherein one battery cell row (R2) of the two other adjacent battery cell rows (R2, R3) is a battery cell row of the two adjacent battery cell rows (R1, R2).

Example 8: The battery cell stack assembly (1) according to Example 7, further comprising:
- a second alignment element (33), provided in the second longitudinally extending space (S2) and below the second cooling plate (5), as seen in the height direction (H), wherein the second alignment element (33) has an extension in the longitudinal direction (L) corresponding to at least a portion of an extension (L2) of the second longitudinally extending space (S2) and is configured to align the two other adjacent battery cell rows (R2, R3) with respect to the longitudinal direction (L), and
- wherein a maximum width (W3) of the second cooling plate (5) in the width direction (W) is larger than a maximum width (W4) of the second alignment element (33) in the width direction (W).

Example 9: The battery cell stack assembly (1) according to Example 8, wherein the width of the second cooling plate (5) in the width direction (W) is larger than the width of the second alignment element (33) in the width direction (W) at any location along at least the portion of the extension (L2) of the second longitudinally extending space (S2).

Example 10: The battery cell stack assembly (1) according to any one of Examples 8-9, wherein the second alignment element (33) is attached to the bottom support plate (3) or is integrally formed with the bottom support plate (3).

Example 11: The battery cell stack assembly (1) according to any one of Examples 8-10, wherein the second alignment element (33) comprises a second upper support surface (331) facing upwardly in the height direction (H), wherein the battery cell stack assembly (1) is configured such that the second cooling plate (33) is supported on the second upper support surface (331).

Example 12: The battery cell stack assembly (1) according to any one of Examples 8-11, wherein the second alignment element (33) comprises at least one second side surface (332, 333), preferably two second side surfaces (332, 333), facing towards a respective battery cell row (R2, R3) of the two other adjacent battery cell rows (R2, R3) in the width direction (W), wherein the second side surface (332, 333) facing towards the respective battery cell row (R2, R3) is a planar surface with an extension in the longitudinal direction (L) and the height direction (W).

Example 13: The battery cell stack assembly (1) according to any one of Examples 7-12, wherein the second cooling plate (5), as seen in a sectional plane which is perpendicular to the longitudinal direction (L), has an extension in the height direction (H) which corresponds to at least 70 % of an extension in the height direction (H) of the second longitudinally extending space (S2).

Example 14: The battery cell stack assembly (1) according to Example 7, wherein the second cooling plate (5') is integrally formed with the bottom support plate (3) or attached to the bottom support plate (3).

Example 15: The battery cell stack assembly (1) according to any one of the preceding Examples, wherein the bottom support plate (3) comprises a cooling circuit for coolant.

Example 16: The battery cell stack assembly (1) according to any one of the preceding Examples, wherein each one of the plurality of prismatic battery cells (2) comprises at least one electric terminal (21), such as two electric terminals (21), on its top surface facing upwardly in the height direction (H).

Example 17: A battery pack (100) comprising a battery cell stack assembly (1) according to any one of the preceding Examples.

Example 18: A battery module (200) for a battery pack (100) comprising a battery cell stack assembly according to any one of Examples 1-16.

Example 19: A vehicle (300) comprising a battery pack (100) according to Example 17 or a battery module (200) according to Example 18.

Example 20: A method for assembling a battery cell stack assembly (1) according to any one of Examples 1-16, comprising:
- providing (S1) a first battery cell row (R1) of the two adjacent battery cell rows (R1, R2) on a first side of the first alignment element (32) and providing a second battery cell row (R2) of the two adjacent battery cell rows (R1, R2) on a second side of the first alignment element (32).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery cell stack assembly (1) for a battery module (100) or a battery pack (200), the battery cell stack assembly (1) having a longitudinal extension along a longitudinal direction (L), a width extension along a width direction (W) and a height extension along a height direction (H), the battery cell stack assembly (1) comprising:
- a plurality of prismatic battery cells (2), stacked next to each other in at least three longitudinally extending and parallel battery cell rows (R1, R2, R3),
- a bottom support plate (3), wherein the at least three battery cell rows (R1, R2, R3) are supported on a support surface (31) of the bottom support plate (3) which faces upwardly in the height direction (H),
- a first cooling plate (4), provided in a first longitudinally extending space (S1) in-between two adjacent battery cell rows (R1, R2) of the at least three battery cell rows (R1, R2, R3), and extending in the longitudinal direction (L) and the height direction (H) such that it forms an intermediate wall between the two adjacent battery cell rows (R1, R2),
- a first alignment element (32), provided in the first longitudinally extending space (S1) and below the first cooling plate (4), as seen in the height direction (H), wherein the first alignment element (32) has an extension in the longitudinal direction (L) corresponding to at least a portion of an extension (L 1) of the first longitudinally extending space (S 1) and is configured to align the two adjacent battery cell rows (R1, R2) with respect to the longitudinal direction (L), and
- wherein a maximum width (W1) of the first cooling plate (4) in the width direction (W) is larger than a maximum width (W2) of the first alignment element (32) in the width direction (W).

2. The battery cell stack assembly (1) according to claim 1, wherein the width of the first cooling plate (4) in the width direction (W) is larger than the width of the first alignment element (32) in the width direction (W) at any location along at least the portion of the extension (L 1) of the first longitudinally extending space (S1).

3. The battery cell stack assembly (1) according to any one of the preceding claims, wherein the first cooling plate (4), as seen in a sectional plane which is perpendicular to the longitudinal direction (L), has an extension in the height direction (H) which corresponds to at least 70 % of an extension in the height direction (H) of the first longitudinally extending space (S 1).

4. The battery cell stack assembly (1) according to any one of the preceding claims, wherein the first alignment element (32) is attached to the bottom support plate (3) or is integrally formed with the bottom support plate (3).

5. The battery cell stack assembly (1) according to any one of the preceding claims, wherein the first alignment element (32) comprises a first upper support surface (321) facing upwardly in the height direction (H), wherein the battery cell stack assembly (1) is configured such that the first cooling plate (4) is supported on the first upper support surface (321).

6. The battery cell stack assembly (1) according to any one of the preceding claims, wherein the first alignment element (32) comprises at least one first side surface (322), preferably two first side surfaces (322, 323), facing towards a respective battery cell row (R1, R2) of the two adjacent battery cell rows (R1, R2) in the width direction (W), wherein the first side surface (322, 323) facing towards the respective battery cell row (R1, R2) is a planar surface with an extension in the longitudinal direction (L) and the height direction (W).

7. The battery cell stack assembly (1) according to any one of the preceding claims, further comprising:
- a second cooling plate (5), provided in a second longitudinally extending space (S2) in-between two other adjacent battery cell rows (R2, R3) of the at least three battery cell rows (R1, R2, R3), and extending in the longitudinal direction (L) and the height direction (H) such that it forms an intermediate wall between the two other adjacent battery cell rows (R2, R3), and wherein one battery cell row (R2) of the two other adjacent battery cell rows (R2, R3) is a battery cell row of the two adjacent battery cell rows (R1, R2).

8. The battery cell stack assembly (1) according to claim 7, further comprising:
- a second alignment element (33), provided in the second longitudinally extending space (S2) and below the second cooling plate (5), as seen in the height direction (H), wherein the second alignment element (33) has an extension in the longitudinal direction (L) corresponding to at least a portion of an extension (L2) of the second longitudinally extending space (S2) and is configured to align the two other adjacent battery cell rows (R2, R3) with respect to the longitudinal direction (L), and
- wherein a maximum width (W3) of the second cooling plate (5) in the width direction (W) is larger than a maximum width (W4) of the second alignment element (33) in the width direction (W).

9. The battery cell stack assembly (1) according to claim 8, wherein the width of the second cooling plate (5) in the width direction (W) is larger than the width of the second alignment element (33) in the width direction (W) at any location along at least the portion of the extension (L2) of the second longitudinally extending space (S2).

10. The battery cell stack assembly (1) according to any one of claims 8-9, wherein the second alignment element (33) is attached to the bottom support plate (3) or is integrally formed with the bottom support plate (3).

11. The battery cell stack assembly (1) according to any one of claims 8-10, wherein the second alignment element (33) comprises a second upper support surface (331) facing upwardly in the height direction (H), wherein the battery cell stack assembly (1) is configured such that the second cooling plate (33) is supported on the second upper support surface (331).

12. The battery cell stack assembly (1) according to any one of claims 8-11, wherein the second alignment element (33) comprises at least one second side surface (332, 333), preferably two second side surfaces (332, 333), facing towards a respective battery cell row (R2, R3) of the two other adjacent battery cell rows (R2, R3) in the width direction (W), wherein the second side surface (332, 333) facing towards the respective battery cell row (R2, R3) is a planar surface with an extension in the longitudinal direction (L) and the height direction (W).

13. The battery cell stack assembly (1) according to claim 7, wherein the second cooling plate (5') is integrally formed with the bottom support plate (3) or attached to the bottom support plate (3).

14. A battery pack (100) comprising a battery cell stack assembly (1) according to any one of the preceding claims.

15. A vehicle (300) comprising a battery pack (100) according to claim 14.
